# EUROPÄISCHE PATENTSCHRIFT

(11) **EP 2 673 054 B1**
(45) Veröffentlichungstag und Bekanntmachung des Hinweises auf die Patenterteilung: **02.05.2018**
(21) Anmeldenummer: 12705083.9
(22) Anmeldetag: 06.02.2012
(51) Int. Cl.: A62D 1/00

(54) **ZUSAMMENSETZUNG ZUM LÖSCHEN UND/ODER HEMMEN VON FLUOR- UND/ODER PHOSPHOR-HALTIGEN BRÄNDEN**
COMPOSITION FOR EXTINGUISHING AND/OR RETARDING FIRES CONTAINING FLUORINE AND/OR PHOSPHORUS
COMPOSITION POUR ÉTEINDRE ET/OU RETARDER DES INCENDIES CONTENANT DU FLUOR ET/OU DU PHOSPHORE

(30) Priorität: 09.02.2011 DE 102011003877
(43) Veröffentlichungstag der Anmeldung: 18.12.2013
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: WOEHRLE, Thomas, 70469 Stuttgart-Feuerbach (DE); KERN, Rainer, 70174 Stuttgart (DE)
(74) Vertreter: Bee, Joachim
(86) Internationale Anmeldenummer: PCT/EP2012/051928
(87) Internationale Veröffentlichungsnummer: WO 2012/107382

(56) Entgegenhaltungen:
- EP-A2- 1 213 778
- WO-A1-2005/014115
- WO-A1-2008/092842
- WO-A1-2010/026084
- WO-A1-2011/032922
- US-A1- 2007 001 156

## Beschreibung

Die vorliegende Erfindung betrifft eine brandlöschende und/oder brandhemmende Zusammensetzung, ein quellbares Polymer für eine derartige Zusammensetzung, ein Verfahren zu deren Herstellung sowie deren Verwendung.

### Stand der Technik

Lithium-Ionen-Batterien können beim elektrischen, mechanischen oder thermischen Missbrauch oder beim unbeabsichtigten internen oder externen Kurzschluss sich mehr oder weniger heftig erwärmen beziehungsweise erhitzen und sogar unter heftiger Feuererscheinung brennen. Die dabei austretenden bzw. entstehende Gase können nach der Literaturangabe Armand et al., Nature, 2003, 424, S. 635-636, toxisch und korrodierend sein. Insbesondere kann das als Leitsalz eingesetztes Lithium-hexa-fluorophosphat (LiPF₆) an Luft mit Feuchte hydrolysieren, wobei Fluorwasserstoff (HF) und Phosphoroxytrifluorid (POF₃) gebildet werden können.

Weiterhin offenbart die WO 2010/026084 A1 brandlöschende und/oder brandhemmende Zusammensetzungen, umfassend ein quellbares Polymer, wobei das quellbare Polymer Carboxygruppen aufweist, wobei die Carboxygruppen zu mindestens teilweise mit Erdalkaliionen neutralisiert sind. Weiterhin zeigt die WO 2008/092842 A1 ein Verfahren zur Herstellung quellbarer wasserabsorbierender Polymerpartikel, wobei eine Monomerlösung oder -Suspension, enthaltend mindestens eine ungesättigte Carbonsäure, wobei deren Carboxygruppen zu mindestens teilweise mit Erdalkaliionen neutralisiert sind. Darüber hinaus zeigt die EP 1 213 778 A2 eine Lithiumionenbatterie, umfassend eine brandlöschende und brandhemmende Zusammensetzung aus einem quellbaren Polymer mit Carboxygruppen. Weiterhin zeigt die WO 2011/032922 A1 einen Superabsorber, hergestellt durch Polymerisation einer Monomermischung, wobei dem Polymer vor der Trocknung ein eine Säuregruppe tragendes Monomer mindestens eines Erdalkalisalzes zugesetzt wird.

### Offenbarung der Erfindung

Gegenstand der vorliegenden Erfindung ist eine brandlöschende und/oder brandhemmende Zusammensetzungen, welche mindestens ein quellbares Polymer umfasst, wobei das quellbare Polymer Säuregruppen, insbesondere Carboxygruppen und/oder Sulfonsäuregruppen, aufweist, wobei die Säuregruppen, insbesondere Carboxygruppen und/oder Sulfonsäuregruppen, zumindest teilweise mit Erdalkaliionen, insbesondere Calciumionen, neutralisiert sind.

Unter einem quellbaren Polymer kann im Sinn der vorliegenden Erfindung insbesondere ein Polymer verstanden werden, welches zwischen beziehungsweise an den Polymersträngen eine Flüssigkeit, beispielsweise Wasser und/oder ein anderes Lösungsmittel, zum Beispiel unter Ausbildung eines Gels oder Kolloids, aufnehmen kann. Insbesondere kann das quellbare Polymer ein in Wasser quellbares beziehungsweise wasserabsorbierendes Polymer beziehungsweise ein Polymer sein, welches mit Wasser ein Gel ausbilden kann. Derartige Polymermaterialien werden auch als Superabsorber oder Hydrogele bezeichnet.

Vorteilhafterweise kann die brandlöschende und/oder brandhemmende Zusammensetzung für Brände von Fluor- und/oder Phosphor-haltigen Materialien, beispielsweise für Brände mit Fluorwasserstoff und/oder Phosphoroxidtrifluorid-Entwicklung, zum Beispiel für Brände von Lithium-Ionen-Batterien, eingesetzt werden. Das quellbare Polymer kann dabei vorteilhafterweise Gele ausbilden, welche das Abfließen von Lösungsmittel, insbesondere Wasser, verringern und damit eine hohe Kühlleistung am Brandherd bereitstellen können. Durch die Erdalkaliionen kann vorteilhafterweise gleichzeitig Fluorwasserstoff (HF) und/oder Phosphoroxidtrifluorid (POF₃) als nicht toxische, insbesondere schwer lösliche, Verbindungen, beispielsweise als Calciumfluorid (CaF₂) und Calciumphosphat (Ca₃(PO₄)₂), gebunden und aus dem Rauchgas entfernt werden. So kann vorteilhafterweise gleichzeitig eine ausreichende Kühlleistung und eine Abbindung der toxischen Emissionen im Brandfall, beispielsweise von Lithium-Ionen-Batterien, erreicht werden. Erstaunlicherweise wird dabei durch die Erdalkaliionen die Quellfähigkeit des quellbaren Polymers nicht wie bei der Zugabe von Calciumchlorid (CaCl₂) zu quellbaren Polymeren nachteilig beeinflusst. Insgesamt können so Brände, insbesondere von Lithium-Ionen-Batterien, zufriedenstellend bekämpft werden.

Das quellbare Polymer als solches kann insbesondere eine Zentrifugenretentionskapazität von mindestens 15 g/g aufweisen. Vorzugsweise weist das quellbare Polymer eine Zentrifugenretentionskapazität von mindestens 20 g/g, besonders bevorzugt von mindestens 25 g/g, auf. Die Zentrifugenretentionskapazität kann dabei insbesondere gemäß der von der EDANA (European Disposables and Nonwovens Association) empfohlenen Testmethode Nr. 441.2-02 'Centrifuge retention capacity' bestimmt werden.

Die Herstellung von quellbaren Polymeren wird beispielsweise in der Monographie 'Modern Superabsorbent Polymer Technology', F.L. Buchholz und A.T. Graham, Wiley-VCH, 1998, oder in Ullmann's Encyclopedia of Industrial Chemistry, 6. Auflage, Band 35, Seiten 73 bis 103, beschrieben.

Zur Herstellung von quellbaren Polymeren können hydrophile ethylenisch ungesättigte, Monomere in Gegenwart von Vernetzern zu einem Grundpolymer umgesetzt werden. Die Polymerisation kann, wie beispielsweise in der Druckschrift US 5,041,496 beschrieben, auch in Gegenwart einer geeigneten Pfropfgrundlage durchgeführt werden. Die Reaktion kann beispielsweise als radikalische Lösungspolymerisation oder inverse Suspensionspolymerisation, insbesondere als radikalische Lösungspolymerisation, durchgeführt werden.

Geeignete Monomere zur Herstellung der quellbaren Polymere sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure.

Vorzugsweise ist das quellbare Polymer vernetzt. Hierfür kann die Polymerisation in Gegenwart von Verbindungen durchgeführt werden, welche mindestens zwei polymerisierbare Gruppen aufweisen, die in das Polymernetzwerk radikalisch einpolymerisiert werden können.

Geeignete Vernetzer sind beispielsweise Ethylenglykoldimethacrylat, Diethylenglykoldiacrylat, Allylmethacrylat, Trimethylolpropantriacrylat, Triallylamin, Tetraallyloxyethan, wie beispielsweise in der Druckschrift EP 530 438 A beschrieben, Di- und Triacrylate, wie beispielsweise in den Druckschriften EP 547847, EP 559476, EP 632068, WO 93/21237, WO 03/104299, WO 03/104300, WO 03/104301 und DE 10355401 beschrieben, gemischte Acrylate, die neben Acrylatgruppen weitere ethylenisch ungesättigte Gruppen enthalten, wie beispielsweise in den Druckschriften DE 10331456 und DE 10355401 beschrieben, oder Vernetzermischungen, wie beispielsweise in den Druckschriften DE 19543368, DE 19646484, WO 90/15830 und WO 02/32962 beschrieben. Vorzugsweise werden die polymerisierbaren Gruppen aus der Gruppe Allyl, Acryloxy und Methacryloxy ausgewählt. Allylether- und Allylamingruppen, insbesondere Allylethergruppen, sind besonders bevorzugt.

Die Vernetzer können zwei, drei, vier oder mehr, vorzugsweise zwei, drei oder vier, besonders bevorzugt drei oder vier, polymerisierbare Gruppen enthalten.

Die polymerisierbaren Gruppen im Vernetzer können gleich oder verschieden sein, beispielsweise kann der Vernetzer mindestens eine Acrylester-Gruppe und mindestens eine Allylether-Gruppe, mindestens eine Acrylester-Gruppe und mindestens eine Allylamin-Gruppe, mindestens eine Methacrylester-Gruppe und mindestens eine Allylether-Gruppe, mindestens eine Methacrylester-Gruppe und mindestens eine Allylamin-Gruppe, mindestens zwei Acrylester-Gruppen oder mindestens zwei Methacrylester-Gruppen, vorzugsweise mindestens eine Allylether-Gruppe und mindestens eine Allylamin-Gruppe oder mindestens zwei Allylamin-Gruppen, besonders bevorzugt mindestens zwei Allylether-Gruppen, enthalten.

Bevorzugte Vernetzer sind Ethylenglykoldiallylether, Diethylenglykoldiallylether, Polyethylenglykoldiallylether, Propylenglykoldiallylether, Dipropylenglykoldiallylether, Polypropylenglykoldiallylether, Tetraallyloxyethan, Trimethylolpropandiallylether, Trimethylolpropantriallylether, Pentaerithrittriallylether und Pentaerithrittetraallylether, insbesondere Tetraallyloxyethan, Trimethylolpropandiallylether, Trimethylolpropantriallylether, Pentaerithrittriallylether und Pentaerithrittetraallylether.

Die Herstellung eines geeigneten Grundpolymers sowie weitere geeignete hydrophile ethylenisch ungesättigte Monomere und Vernetzer werden in den Druckschriften DE 19941423, EP 686650, WO 01/45758 und WO 03/104300 beschrieben.

Die Umsetzung wird vorzugsweise in einem Kneter, wie beispielsweise in der Druckschrift WO 01/38402 beschrieben, oder auf einem Bandreaktor, wie beispielsweise in der Druckschrift EP 955086 beschrieben, durchgeführt.

Im Rahmen einer bevorzugten Ausführungsform sind die Säuregruppen, insbesondere Carboxygruppen, zumindest teilweise mit Calciumionen neutralisiert.

Calciumionen weisen dabei den Vorteil auf, dass diese Fluorwasserstoff und/oder Phosphoroxidtrifluorid (POF₃) binden können.

Vorzugsweise sind von ≥ 25 mol-% bis ≤ 85 mol-%, bevorzugt von ≥ 40 mol-% bis ≤ 75 mol-%, besonders bevorzugt von ≥ 51 mol-% bis ≤ 69 mol-%, ganz besonders bevorzugt von ≥ 55 mol-% bis ≤ 65 mol-%, insbesondere bevorzugt von ≥ 53 mol-% bis ≤ 63 mol-%, insbesondere besonders bevorzugt von ≥ 59 mol-% bis ≤ 61 mol-%, der Säuregruppen, insbesondere Carboxygruppen, des quellbaren Polymers mit Erdalkaliionen, insbesondere Calciumionen, neutralisiert. Erdalkaliionen, insbesondere Calciumionen, weisen dabei den Vorteil auf, dass diese Fluorwasserstoff und/oder Phosphoroxidtrifluorid (POF₃) binden können.

Als Neutralisationsmittel können beispielsweise, Erdalkalimetallhydroxide, Erdalkalimetalloxide, insbesondere welche mit Wasser zu Erdalkalimetallhydroxide reagieren, Erdalkalimetallcarbonate oder sowie deren Mischungen verwendet werden, wobei Calcium als Erdalkalimetall besonders bevorzugt ist. Auch können Calciumcarboxylate einer oder mehrerer Carbonsäuren, vorzugsweise mit einer Molmasse von weniger als 1000 g/mol, beispielsweise von weniger als 500 g/mol, insbesondere von weniger als 200 g/mol, eingesetzt werden. Ganz besonders bevorzugt ist Calciumhydroxid. Üblicherweise wird die Neutralisation durch Einmischung des Neutralisationsmittels als Feststoff oder als wässrige Lösung erreicht.

Die neutralisierten Säuregruppen, insbesondere Carboxygruppen, des quellbaren Polymers weisen vorzugsweise zu mindestens 15 mol-%, bevorzugt zu mindestens 33 mol-%, besonders bevorzugt zu mindestens 80 mol-%, ganz besonders bevorzugt zu mindestens 95 mol-%, Erdalkaliionen, insbesondere Calciumionen, als Gegenion auf.

Das quellbare Polymer, insbesondere neutralisierte quellbare Polymer, kann mit einem Band- oder Walzentrockner getrocknet werden, beispielsweise bis der Restfeuchtegehalt unter 10 Gew.-%, zum Beispiel unter 5 Gew.-% liegt, wobei der Wassergehalt gemäß der von der EDANA (European Disposables and Nonwovens Association) empfohlenen Testmethode Nr. 430.2-02 'Moisture content' bestimmt werden kann.

Nach dem Trocknen kann das quellbare Polymer gemahlen und gesiebt werden, wobei zur Mahlung üblicherweise Walzenstühle, Stiftmühlen oder Schwingmühlen eingesetzt werden können.

Die Partikelgröße des quellbaren Polymers kann insbesondere ≤ 1000 µm, beispielsweise ≤ 900 µm oder ≤ 800 µm, und/oder ≥ 100 µm, beispielsweise ≥ 150 µm oder ≥ 200 µm, betragen. Zum Beispiel kann das quellbare Polymer eine Partikelgröße (Siebschnitt) von 106 µm bis 850 µm aufweisen. Die Partikelgröße kann gemäß der von der EDANA (European Disposables and Nonwovens Association) empfohlenen Testmethode Nr. 420.2-02 'Particle size distribution' bestimmt werden.

Das Grundpolymer kann insbesondere oberflächennachvernetzt werden. Hierzu geeignete Nachvernetzer sind Verbindungen, die mindestens zwei Gruppen enthalten, die mit den Säuregruppen des Polymers kovalente Bindungen bilden können. Geeignete Verbindungen für Carboxygruppen aufweisende Polymere sind beispielsweise Alkoxysilylverbindungen, Polyaziridine, Polyamine, Polyamidoamine, Di- oder Polyglycidylverbindungen, wie in EP 083022, EP 543303 und EP 937736 beschrieben, di- oder polyfunktionelle Alkohole, wie in DE 3314019, DE 3523617 und EP 450922 beschrieben, oder beta-Hydroxyalkylamide, wie in DE 10204938 und US 6,239,230 beschrieben. Des Weiteren sind in DE 4020780 cyclische Carbonate, in DE 19807502 Oxazolidon und dessen Derivate, wie 2-Hydroxyethyl-2-oxozolidon, in DE 19807992 Bis- und Poly-2-oxazolidinone, in DE 19854573 Oxotetrahydro-1,3-oxazin und dessen Derivate, in DE 19854574 N-Acyl-2-Oxazolidone, in DE 10204937 cyklische Harnstoffe, in DE 10334584 bicyklische Amidacetale, in EP 1199327 Oxetane und cyklische Harnstoffe und in WO 03/031482 Morpholin-2,3-dion und dessen Derivate als geeignete Oberflächennnachvernetzer beschrieben.

Die Nachvernetzung kann beispielsweise derart durchgeführt werden, dass eine Lösung des Oberflächennachvernetzers auf das Polymer aufgesprüht wird. Danach kann eine thermische Trocknung erfolgen, wobei die Vernetzungsreaktion sowohl vor als auch während der Trocknung stattfinden kann. Das Aufsprühen der Nachvernetzerlösung erfolgt vorzugsweise in Mischern mit bewegten Mischwerkzeugen, wie einem Schneckenmischer, Paddelmischer, Scheibenmischer, Pflugscharmischer oder Schaufelmischer, insbesondere einem Vertikalmischer, zum Beispiel einem Pflugscharmischer oder Schaufelmischer. Geeignete Mischer sind beispielsweise Lödige-Mischer, Bepex-Mischer, Nauta-Mischer, Processall-Mischer und Schugi-Mischer. Die thermische Trocknung kann beispielsweise in Kontakttrocknern, wie einem Schaufeltrockner, insbesondere einem Scheibentrockner, durchgeführt werden. Geeignete Trockner sind beispielsweise Bepex-Trockner und Nara-Trockner. Auch können Wirbelschichttrockner eingesetzt werden. Die Trocknung kann im Mischer selbst, beispielsweise durch Beheizung des Mantels oder Einblasen von Warmluft, erfolgen. Es kann jedoch auch ein Trockner, beispielsweise ein Hordentrockner, ein Drehrohrofen oder eine beheizbare Schnecke, nachgeschaltet werden. Es kann aber auch beispielsweise eine azeotrope Destillation als Trocknungsverfahren eingesetzt werden. Die Trocknungstemperatur kann beispielsweise in einem Bereich von ≥ 50 °C bis ≤ 250 °C, insbesondere von ≥ 50 °C bis ≤ 200 °C oder ≤ 150 °C liegen. Die Verweilzeit bei dieser Temperatur im Reaktionsmischer oder Trockner kann beispielsweise ≤ 30 Minuten, insbesondere ≤ 10 Minuten, betragen.

Das Grundpolymer kann insbesondere schwach, das heißt mit einer Nachvernetzerkonzentration von ≤ 0,3 Gew.-%, insbesondere von ≤ 0,2 Gew.-% beziehungsweise von ≤ 0,15 Gew.-% oder von ≤ 0,1 Gew.-%, jeweils bezogen auf das Grundpolymer, nachvernetzt werden. Um eine ausreichende Nachvernetzung zu erreichen werden vorzugsweise ≥ 0,01 Gew.-%, insbesondere ≥ 0,025 Gew.-%, beziehungsweise ≥ 0,05 Gew.-%, Nachvernetzer eingesetzt, jeweils bezogen auf das Grundpolymer.

Schwach nachvernetzte quellbare Polymere können beispielsweise eine Absorption unter einem Druck von 2070 Pa (0,3 psi) von ≤ 25 g/g, beispielsweise von ≤ 23 g/g, zum Beispiel von ≤ 21 g/g, und/oder eine Absorption unter einem Druck von 4830 Pa von ≤ 18 g/g, beispielsweise von ≤ 15g/g oder von ≤ 12 g/g, aufweisen. Die Absorption unter Druck kann dabei insbesondere gemäß der von der EDANA (European Disposables and Nonwovens Association) empfohlenen Testmethode Nr. 442.2-02 'Absorption under pressure' bestimmt werden.

Durch die Nachvernetzung kann die Klebrigkeit des quellbaren Polymers eingestellt werden. Bei einer sehr geringen Nachvernetzung können die Partikel im gequollenen Zustand zu aneinander kleben und zur Verbackung neigen. Bei einer sehr starken Nachvernetzung können die gequollenen Partikel ihre Klebrigkeit verlieren. Für den Einsatz bei der Brandbekämpfung und/oder Brandhemmung kann eine Klebrigkeit vorteilhaft sein, welche dahingehend optimiert ist, dass die Partikel ohne weitere Hilfsstoffe auf dem zu schützenden brennbaren Material haften können.

Im Rahmen einer weiteren bevorzugten Ausführungsform umfasst oder ist das quellbare Polymer ein zumindest teilweise Erdalkaliionen, insbesondere Calciumionen, neutralisiertes, insbesondere vernetztes, Polymer auf der Basis von Acrylsäure- und/oder Acrylsäurederivaten. Zum Beispiel kann das quellbare Polymer eine zumindest teilweise Erdalkaliionen, insbesondere Calciumionen, neutralisierte, insbesondere vernetzte, Polyacrylsäure umfassen oder sein. Erdalkaliionen neutralisierte Polymere auf der Basis von Acrylsäure- und/oder Acrylsäurederivaten haben sich insbesondere zur Bekämpfung und/oder Hemmung von Bränden von Fluor- und/oder Phosphor-haltigen Materialien als vorteilhaft erwiesen.

Im Rahmen einer weiteren bevorzugten Ausführungsform umfasst oder ist das quellbare Polymer ein zumindest teilweise Erdalkaliionen, insbesondere Calciumionen, neutralisiertes, insbesondere vernetztes, Acrylsäure-Acrylamid-Copolymer. Derartige quellbare Polymere haben sich zur Bekämpfung und/oder Hemmung von Bränden von Fluor- und/oder Phosphor-haltigen Materialien als besonders vorteilhaft erwiesen.

Im Rahmen einer weiteren bevorzugten Ausführungsform umfasst die Zusammensetzung (weiterhin) mindestens ein Erdalkalicarboxylat, insbesondere Calciumcarboxylat, einer oder mehrere Carbonsäuren.

Unter einem Erdalkalicarboxylat, insbesondere Calciumcarboxylat, einer oder mehrere Carbonsäuren kann insbesondere ein Erdalkalicarboxylat, insbesondere Calciumcarboxylat, verstanden werden, welches eine oder mehrere, gleiche oder unterschiedliche Carboxylatgruppen umfasst.

Vorzugsweise weist die Carbonsäure / das Carboxylat beziehungsweise weisen die Carbonsäuren / Carboxylate des mindestens einen Erdalkalicarboxylats, insbesondere Calciumcarboxylats, jeweils ein Molekulargewicht von unter 5000 g/mol, insbesondere von unter 1000g/mol, beispielsweise von unter 500 g/mol, zum Beispiel von unter 200 g/mol, auf. Die Carboxylatanionen weisen vorteilhafterweise eine geringere Ladungsdichte als Chloridionen auf und neigen nicht dazu Wasser-Moleküle aus den Polymersegmenten zu verdrängen. Daher haben Erdalkalicarboxylate, insbesondere Calciumcarboxylate, im Gegensatz zu Erdalkalichloriden, insbesondere Calciumchlorid, welche die Quellfähigkeit von quellbaren Polymeren stark herabsetzen, vorteilhafterweise nur einen geringen Einfluss auf des Quellfähigkeit des quellbaren Polymers. Zudem weisen Erdalkalicarboxylate, insbesondere Calciumcarboxylate, vorteilhafterweise eine gute Löslichkeit in Wasser auf und lassen sich auch nach dem Löschen eines Brandes noch gut entfernen. Weiterhin sind Carboxylate nicht korrosiv, insbesondere gegen Aluminium und Stahl. Dies ist insbesondere vorteilhaft, da Fahrzeuge, wie Kraftfahrzeuge und Flugzeuge, zu einem großen Anteil aus Aluminium und Stahl bestehen können. Zudem bietet dies die Möglichkeit die Zusammensetzung, beispielsweise mehrere Jahre, in metallischen Behältnissen, zu lagern beziehungsweise zu bevorraten. Darüber hinaus weisen Erdalkalicarboxylate, insbesondere Calciumcarboxylate, vorteilhafterweise eine ausgeprägte Langzeitwirkung auf, das heißt sie können als wässrige Lösungen aufgebracht werden und behalten ihre brandhemmende Wirkung auch nach dem Trocknen.

In einer Erdalkalicarboxylat, insbesondere Calciumcarboxylat, haltigen Zusammensetzung kann das quellbare Polymer insbesondere eine Zentrifugenretentionskapazität von mindestens 5 g/g aufweisen. Vorzugsweise weist das quellbare Polymer in einer Erdalkalicarboxylat, insbesondere Calciumcarboxylat, haltigen Zusammensetzung eine Zentrifugenretentionskapazität von mindestens 10 g/g, besonders bevorzugt von mindestens 15 g/g, auf. Die Zentrifugenretentionskapazitätsbestimmung kann dabei insbesondere analog zu der von der EDANA (European Disposables and Nonwovens Association) empfohlenen Testmethode Nr. 441.2-02 'Centrifuge retention capacity' mit einer 10 gewichtsprozentigen, wässrigen Erdalkalicarboxylatlösung, insbesondere Calciumcarboxylatlösung, durchgeführt werden.

Grundsätzlich können Erdalkalicarboxylate von allen Erdalkalielementen eingesetzt werden. Aus Kostengründen und auf Grund der guten Verträglichkeit sind jedoch Calciumcarboxylate und Magnesiumcarboxylate, insbesondere Calciumcarboxylate, bevorzugt. Vorzugsweise umfasst oder ist das mindestens eine Erdalkalicarboxylat einer oder mehrere Carbonsäuren ein Calciumcarboxylat einer oder mehrere Carbonsäuren.

Die in den erfindungsgemäßen Zusammensetzungen einsetzbaren Erdalkalicarboxylate, insbesondere Calciumcarboxylate, enthalten vorzugsweise Carboxylatgruppen, deren korrespondierende Carbonsäuren bei 23 °C einen pKs-Wert von ≤ 7, beispielsweise von ≤ 6 beziehungsweise von ≤ 5, und/oder von ≥ 2, beispielsweise von ≥ 3 beziehungsweise von ≥ 4, aufweisen.

Unter Carbonsäuren können Mono-, Di-, Tri-, Tetra-, Penta-, und Polycarbonsäuren verstanden werden. Vorzugsweise werden Erdalkalicarboxylate von gesättigten Carbonsäuren, das heißt Carbonsäuren, die keine ethylenisch ungesättigten Gruppen aufweisen, eingesetzte. Diese sind vorteilhafterweise weniger reaktionsfähig als ungesättigte Carbonsäuren, welche radikalisch polymerisieren und dadurch die Lagerstabilität der Zusammensetzung senken können.

Vorzugsweise sollte das atomare Verhältnis von Kohlenstoff zu Erdalkalimetall in dem verwendeten Erdalkalicarboxylat unter 20:1, beispielsweise unter 12:1 beziehungsweise unter 6:1, und/oder mindestens 2:1, beispielsweise mindestens 3:1, betragen. Das atomare Verhältnis von Sauerstoff zu Kohlenstoff in dem verwendeten Erdalkalicarboxylat, insbesondere Calciumcarboxylat, sollte vorzugsweise mindestens 0,85:1, beispielsweise mindestens 1:1, zum Beispiel mindestens 1,15:1, betragen. Erdalkalicarboxylate welche diese Bedingungen erfüllen, enthalten im Verhältnis zum Erdalkalimetall wenig Kohlenstoff, wobei der Kohlenstoff eine hohe mittlere Oxidationsstufe aufweist. So können die Erdalkalicarboxylate - aufgrund ihrer Stöchiometrie - vorteilhafterweise selber bei der Verbrennung nur wenig Energie liefern und viel Kohlendioxid erzeugen.

Besonders gute Ergebnisse wurden mit Mono-Carbonsäure-Anionen und Calcium-Kationen erzielt. Mono-Carbonsäuren und Calcium sind vorteilhafterweise gut verfügbar, nicht toxisch und wenig kostenintensiv.

Im Rahmen einer weiteren bevorzugten Ausführungsform umfasst das Erdalkalicarboxylat, insbesondere Calciumcarboxylat, eine oder mehrere, gleiche oder unterschiedliche Carboxylatgruppen, welche ausgewählt sind aus der Gruppe bestehend aus Lactat, Gluconat, Citrat, Oxalat und Tartrat. Diese Erdalkalicarboxylate haben sich im Rahmen der vorliegenden Erfindung als besonders vorteilhaft herausgestellt.

Im Rahmen einer weiteren bevorzugten Ausführungsform ist das Erdalkalicarboxylat, insbesondere Calciumcarboxylat, ausgewählt aus der Gruppe bestehend aus Calciumlactatgluconat, Calciumlactat, Calciumgluconat, Calciumcitrat, Calciumoxalat, Calciumtartrat und Kombinationen davon. Insbesondere kann das Erdalkalicarboxylat, insbesondere Calciumcarboxylat, ausgewählt sein aus der Gruppe bestehend aus Calciumlactatgluconat, Calciumlactat, Calciumgluconat, Calciumcitrat und Kombinationen davon. Diese Calciumcarboxylate haben sich im Rahmen der vorliegenden Erfindung als besonders vorteilhafte Erdalkalicarboxylate herausgestellte.

Vorzugsweise ist das Erdalkalicarboxylat, insbesondere Calciumcarboxylat, ausgewählt aus der Gruppe bestehend aus Calciumlactatgluconat, Calciumlactat, Calciumgluconat und Kombinationen davon. Diese Calciumcarboxylate weisen vorteilhafterweise eine besonders hohe Löslichkeit in Wasser auf. Überraschenderweise ist dabei die Wasserlöslichkeit von Calciumlactatgluconat, bei dem das Calciumkation sowohl durch Lactat- als auch Gluconatanionen komplexiert ist, deutlich höher als die Wasserlöslichkeit von reinem Calciumlactat und reinem Calciumgluconat, weshalb Calciumlactatgluconat besonders bevorzugt ist. Zudem weisen quellbare Polymere in Gegenwart von Calciumlactatgluconat vorteilhafterweise eine gute Quellfähigkeit auf.

Das Gewichtsverhältnis von quellbarem Polymer zu Erdalkalicarboxylat kann beispielsweise in einem Bereich von 100:1 bis 1:1000, beispielsweise von 1:1 bis 1:100, zum Beispiel von 1:2 bis 1:50 oder von 1:4 bis 1:25 oder von 1:8 bis 1:15, liegen. Bei einem zu geringen Anteil an quellbarem Polymer kann die Sofortlöschwirkung zu gering sein. Bei einem hohen Anteil an quellbarem Polymer steigt die Viskosität. Bei der Verwendung der Zusammensetzung als Beschichtung kann dies jedoch vorteilhaft sein, weshalb das quellbare Polymer hierfür auch in höheren als den vorstehenden Anteilen in der Zusammensetzung enthalten sein kann.

Im Rahmen einer weiteren bevorzugten Ausführungsform umfasst die Zusammensetzung (weiterhin) Wasser. Dabei kann Wasser der Zusammensetzung vor oder während des Einsatzes zur Brandbekämpfung und/oder -Hemmung zugemischt werden. Beispielsweise kann eine wässrige Zusammensetzung hergestellt und für einen Löscheinsatz bereitgehalten werden. Es ist aber auch möglich die wässrige Zubereitung erst während eines Löscheinsatzes durch Verdünnen mit Wasser herzustellen. Die erfindungsgemäße Zusammensetzung eignet sich jedoch auch als brandhemmende Beschichtung. Der Wassergehalt kann beispielsweise ≥ 55 Gew.-%, zum Beispiel ≥ 65 Gew.-% beziehungsweise ≥ 75 Gew.-% oder ≥ 85 Gew.-%, und/oder ≤ 95 Gew.-%, zum Beispiel ≤ 90 Gew.-%, jeweils bezogen auf das Gesamtgewicht der Zusammensetzung, betragen.

Weiterhin kann die Zusammensetzung mindestens ein Antiseparations- und/oder Verdickungsmittel umfassen. Durch das Antiseparations- und/oder Verdickungsmittel kann vorteilhafterweise die Lagerstabilität einer wässrigen Zusammensetzung erhöht und ein Sedimentieren des gequollenen Polymers verhindert werden. Für manche Anwendungen ist es dabei vorteilhaft, wenn die Antiseparations- und/oder Verdickungsmittel und Wasser enthaltende Zusammensetzung noch pumpbar ist.

Geeignete Antiseparations- und/oder Verdickungsmittel sind natürliche organische Verdicker, wie Agar-Agar, Carrageen, Tragant, Xanthan, Gummi arabicum, Alginate, Pektine, Polyosen, Guar-Mehl, Johannisbrotbaumkernmehl, Stärke, Dextrine, Gelatine oder Casein, abgewandelte organische Naturstoffe, wie Carboxymethylcellulose, vollsynthethische organische Verdicker, wie Polyacrylverbindungen, Polymethacrylverbindungen, Vinylpolymere, Polycarbonsäuren, Polyether, Polyimine oder Polyamide, sowie anorganische Verdicker, wie Polykieselsäuren oder Tonmineralien.

Die Konzentration des Antiseparations- und/oder Verdickungsmittel in einer Wasser enthaltenden Zusammensetzung kann zum Beispiel ≤ 2 Gew.-%, beispielsweise ≤ 1 Gew.-% beziehungsweise ≤ 0,5 Gew.-%, und/oder ≥ 0,01 Gew.-%, beispielsweise ≥ 0,05 Gew.-% beziehungsweise ≥ 0,1 Gew.-%, jeweils bezogen auf das Gesamtgewicht der Wasser enthaltende Zusammensetzung, betragen.

Die Viskosität einer Wasser enthaltenden Zusammensetzung kann zum Beispiel ≥ 100 mPas, beispielsweise ≥ 200 mPas beziehungsweise ≥ 500 mPas, und/oder ≤ 5000 mPas, beispielsweise ≤ 2000 mPas beziehungsweise ≤ 1000 mPas, betragen.

Weiterhin kann die erfindungsgemäße Zusammensetzung noch Biozide enthalten. Biozide können vorteilhafterweise die Lagerstabilität, insbesondere einer Wasser enthaltenden, Zusammensetzung erhöhen.

Im Rahmen einer weiteren bevorzugten Ausführungsform umfasst die Zusammensetzung (weiterhin) mindestens ein Schaummittel. Geeignete Schaummittel sind beispielsweise Mehrbereichsschaummittel, Proteinschaummittel und Fluortensidschaummittel, insbesondere Mehrbereichsschaummittel und Fluortensidschaummittel. Bei der Anwendung der erfindungsgemäßen Zusammensetzung wird der Schaum in üblicher Weise durch Einmischen von Luft erzeugt. Die Kombination eines quellbaren beziehungsweise gequollenen Polymers mit einem Schaum ist besonders vorteilhaft beim Löschen brennbarer Flüssigkeiten. da beim Löschen brennbarer Flüssigkeiten mit Löschschaum die Sauerstoffzufuhr durch den Schaum unterbrochen werden kann. Durch das quellbare beziehungsweise gequollene Polymer können zudem entzündbare Flächen soweit abgekühlt werden, dass eine Zündung nicht mehr möglich ist.

Zum Beispiel kann die erfindungsgemäße Zusammensetzung:
- ≥ 0,1 Gew.-% bis ≤ 10 Gew.-%, beispielsweise ≥ 0,5 Gew.-% bis ≤ 5 Gew.-% beziehungsweise ≥ 0,8 Gew.-% bis ≤ 3 Gew.-%, an quellbaren, Erdalkaliionen, insbesondere Calciumionen, neutralisierten Polymeren und
- gegebenenfalls ≥ 1 Gew.-% bis ≤ 65 Gew.-%, beispielsweise ≥ 5 Gew.-% bis ≤ 40 Gew.-% beziehungsweise ≥ 5 Gew.-% bis ≤ 12 Gew.-%, an Erdalkalicarboxylaten, insbesondere Calciumcarboxylaten, und
- gegebenenfalls ≥ 0,01 Gew.-% bis ≤ 2 Gew.-%, beispielsweise ≥ 0,05 Gew.-% bis ≤ 1 Gew.-% beziehungsweise ≥ 0,1 Gew.-% bis ≤ 0,5 Gew.-%, an Antiseparations- und/oder Verdickungsmitteln,
- ≥ 30 Gew.-% bis ≤ 95 Gew.-%, beispielsweise ≥ 55 Gew.-% bis ≤ 92 Gew.-% beziehungsweise ≥ 85 Gew.-% bis ≤ 90 Gew.% an Wasser,
- gegebenenfalls mindestens ein Schaummittel, sowie
- gegebenenfalls mindestens ein Biozid,
- gegebenenfalls mindestens ein Farbmittel, und
- gegebenenfalls mindestens ein Deckhilfsmittel,
umfassen, insbesondere wobei die Summe der Komponenten 100 Gewichtsprozent ergibt.

Hinsichtlich weiterer Merkmale und Vorteile wird hiermit explizit auf die Erläuterungen im Zusammenhang mit dem erfindungsgemäßen Verfahren, der erfindungsgemäßen Verwendung, den erfindungsgemäßen Vorrichtungen, den Beispielen und der Figurenbeschreibung verwiesen.

Ein weiterer Gegenstand der vorliegenden Erfindung ist ein quellbares, Säuregruppen, insbesondere Carboxygruppen und/oder Sulfonsäuregruppen, aufweisendes Polymer, dessen Säuregruppen, insbesondere Carboxygruppen und/oder Sulfonsäuregruppen, zumindest teilweise mit Erdalkaliionen, insbesondere Calciumionen, neutralisiert sind.

Hinsichtlich weiterer Merkmale und Vorteile wird hiermit explizit auf die Erläuterungen im Zusammenhang mit der erfindungsgemäßen Zusammensetzung, dem erfindungsgemäßen Verfahren, der erfindungsgemäßen Verwendung, den erfindungsgemäßen Vorrichtungen, den Beispielen und der Figurenbeschreibung verwiesen.

Ein weiterer Gegenstand der vorliegenden Erfindung ist ein Verfahren zur Herstellung einer erfindungsgemäßen Zusammensetzung und/oder eines erfindungsgemäßen Polymers.

Die Neutralisation der Säuregruppen, insbesondere Carboxygruppen, des quellbaren Polymers kann vor der Polymerisation, beispielsweise auf der Stufe einer Monomerlösung, oder nach der Polymerisation durchgeführt werden. Es ist aber auch möglich einen Teil der Neutralisation auf der Stufe der Monomerlösung durchzuführen und den gewünschten Endneutralisationsgrad nach der Polymerisation einzustellen.

Zum Beispiel können Monomere bereitgestellt werden, welche zu einem quellbaren Polymer polymerisierbar sind und welche jeweils mindestens eine an der Polymerisationsreaktion nicht teilnehmende Säuregruppe, insbesondere Carboxygruppe, aufweisen.

Die Säuregruppen, insbesondere Carboxygruppen, können dabei zunächst zumindest teilweise mit Erdalkaliionen, insbesondere Calciumionen, neutralisiert und die Monomere später zu dem quellbaren Polymer polymerisiert werden. Dabei kann eine Monomerlösung durch Einmischen der zuvor erläuterten Neutralisationsmittel neutralisiert werden.

Alternativ oder zusätzlich dazu können die Monomere zunächst zu dem quellbaren Polymer polymerisiert werden und die Säuregruppen, insbesondere Carboxygruppen, später zumindest teilweise mit Erdalkaliionen, insbesondere Calciumionen, neutralisiert werden. Beispielsweise kann das Polymer mechanisch, zum Beispiel mittels eines Fleischwolfes, zerkleinert werden, wobei das Neutralisationsmittel aufgesprüht, übergestreut oder aufgegossen und dann sorgfältig untergemischt wird. Zur Homogenisierung kann das Polymer mehrmals geliert beziehungsweise gequollen werden.

Vorzugsweise wird die Neutralisation zumindest teilweise nach der Polymerisation durchgeführt.

Beispielsweise können ≥ 40 mol-%, vorzugsweise ≥ 10 mol-% bis ≤ 30 mol-%, besonders bevorzugt ≥ 15 mol-% bis ≤ 25 mol-%, der Säureguppen, insbesondere Carboxygruppen, des herzustellenden quellbaren Polymers vor der Polymerisation neutralisiert werden indem ein Teil des Neutralisationsmittels bereits einer Monomerlösung zugesetzt wird. Der gewünschte Endneutralisationsgrad kann dann später nach der Polymerisation eingestellt werden.

Im Rahmen einer weiteren Ausführungsform des Verfahrens wird mindestens ein quellbares, Säuregruppen, insbesondere Carboxygruppen, aufweisendes Polymer bereitgestellt, dessen Säuregruppen, insbesondere Carboxygruppen, zumindest teilweise mit Alkaliionen neutralisiert sind, wobei die Alkaliionen mittels Ionenaustauscher zumindest teilweise gegen Erdalkaliionen, insbesondere Calciumionen, ausgetauscht werden.

Die Zusammensetzung kann durch Mischen der Komponenten herstellen werden. Grundsätzlich ist die Reihenfolge des Mischens beliebig.

Im Rahmen einer weiteren Ausführungsform des Verfahrens werden mindestens ein quellbares, mit Erdalkaliionen, insbesondere Calciumionen, zumindest teilweise, insbesondere gemäß den vorstehenden Ausgestaltungen, neutralisiertes Polymer und mindestens ein Erdalkalicarboxylat gemischt.

Im Rahmen einer weiteren Ausführungsform des Verfahrens werden mindestens ein quellbares, mit Erdalkaliionen, insbesondere Calciumionen, zumindest teilweise, insbesondere gemäß den vorstehenden Ausgestaltungen, neutralisiertes Polymer, gegebenenfalls mindestens ein Erdalkalicarboxylat und mindestens ein Lösungsmittel, beispielsweise Wasser, gemischt. Vorzugsweise werden lösungsmittelhaltige Zusammensetzungen hergestellt, indem das oder die Lösungsmittel vorgelegt und die übrigen Komponenten eingemischt werden. Vorzugsweise wird das mindestens eine quellbare, Erdalkaliionen neutralisierte Polymer, gegebenenfalls das mindestens eine Erdalkalicarboxylat und gegebenenfalls das mindestens eine Antiseparations- und/oder Verdickungsmitteln zuletzt zugesetzt. Es ist aber auch möglich das mindestens eine Schaummittel zuletzt zuzumischen. Dies kann zum Beispiel während eines Löscheinsatzes beispielsweise durch eine geeignete Venturidüse erfolgen.

Hinsichtlich weiterer Merkmale und Vorteile wird hiermit explizit auf die Erläuterungen im Zusammenhang mit der erfindungsgemäßen Zusammensetzung, der erfindungsgemäßen Verwendung, den erfindungsgemäßen Vorrichtungen, den Beispielen und der Figurenbeschreibung verwiesen.

Ein weiterer Gegenstand der vorliegenden Erfindung ist Verwendung einer erfindungsgemäßen Zusammensetzung und/oder eines erfindungsgemäßen Polymers zur Brandbekämpfung, insbesondere als Löschmittel, und/oder zur Herstellung einer brandhemmenden Beschichtung. Insbesondere kann die erfindungsgemäße Zusammensetzung zur Bekämpfung und/oder Hemmung von Bränden von Fluor- und/oder Phosphor-haltigen Materialien, beispielsweise für Brände mit Fluorwasserstoff und/oder Phosphoroxidtrifluorid-Entwicklung, zum Beispiel für Brände von Lithium-Ionen-Batterien, sowohl mit einem starren Gehäuse (Hardcase) als auch mit einer flexiblen Verpackung (Softpackage, Pouch-Zellen, Lithium-Polymer-Zellen), verwendet werden.

Insbesondere kann die erfindungsgemäße Zusammensetzung und/oder das erfindungsgemäße Polymer in einer stationären oder mobilen Löschvorrichtung, beispielsweise in einer Hochdrucknebel-Löschvorrichtung oder einem Handfeuerlöscher, insbesondere in oder für ein Fahrzeug, in oder für ein Lithium-Ionen-Batterie, in oder für eine Lithium-Ionen-Batterie-Fertigungs-, Assemblierungs- und/oder -Prüfanlage und/oder in oder für ein Lithium-Ionen- Batterie-Behältnis, beispielsweise Transportbehältnis, verwendet werden.

Unter einer stationären Löschvorrichtung können beispielsweise Vorrichtungen verstanden werden, welche in einem Gebäude, einer Anlage, einer Maschine oder einem Fahrzeug fest installiert sind, insbesondere um einen Brand in dem Teil des Gebäudes, der Maschine oder des Fahrzeugs zu bekämpfen und/oder zu hemmen an dem die Vorrichtung installiert ist.

Unter einer mobilen Löschvorrichtung können beispielsweise Vorrichtungen verstanden werden, welche tragbar und/oder fahrbar sind, insbesondere um im Brandfall an den Ort des Brandes transportiert zu werden.

Die Begriffe stationär und mobil beziehen sich somit dabei insbesondere auf die örtlichen Gegebenheiten zwischen Löschvorrichtung und Brandort. Eine in einem Fahrzeug fest installiert Löschvorrichtung, welche zur Bekämpfung und/oder Hemmung eines Brandes in dem Fahrzeug ausgelegt ist, kann daher als stationäre Löschvorrichtung verstanden werden, auch wenn das Fahrzeug als solches beweglich ist, wobei ein in einem Fahrzeug fest installierte Löschvorrichtung, welche zur Bekämpfung und/oder Hemmung von Bränden an Orten außerhalb des Fahrzeugs ausgelegt ist zu welchen die Löschvorrichtung mittels des Fahrzeugs transportiert werden kann, wie im Fall eines Löschfahrzeugs, als mobile Löschvorrichtung verstanden werden kann.

Eine Löschvorrichtung in oder für ein Fahrzeug, in oder für ein Lithium-Ionen-Batterie, in oder für eine Lithium-Ionen-Batterie-Fertigungs-, Assemblierungs- und/oder -Prüfanlage und/oder in oder für ein Lithium-Ionen-Batterie-Behältnis kann beispielsweise mit einer erfindungsgemäßen Zusammensetzung gefüllt werden, aus welcher die Zusammensetzung im Gefahrfall gespendet werden kann.

Aufgrund des quellbaren Polymers kann eine erfindungsgemäße wässrige Zusammensetzung vorteilhafterweise eine geringere Verdampfung und damit stärkere Kühlwirkung aufweisen als eine wässrige Erdalkalisalzlösung ohne quellbare Polymere.

Mit einer erfindungsgemäßen Zusammensetzung und/oder einem erfindungsgemäßen Polymer können beispielsweise Behältnisse, wie Gehäuse, für Lithium-Ionen-Batterien und/oder Fahrzeugbauteile, beispielsweise Karosseriebauteile, beschichtet werden. Mit einer erfindungsgemäßen Zusammensetzung und/oder einem erfindungsgemäßen Polymer beschichtete Baustoffe und/oder Bauteile können verglichen mit unbeschichteten Baustoffen und/oder Bauteilen deutlich schwerer entflammbar sein und zudem die Eigenschaft aufweisen Zersetzungsprodukte von fluor- und/oder phosphorhaltigen Materialien zumindest teilweise zu binden.

Eine wasserhaltige Zusammensetzung kann beispielsweise für einen Feuerlöscheinsatz bereitgehalten werden. Es ist aber auch möglich eine wasserhaltige Zusammensetzung erst während eines Feuerlöscheinsatzes, beispielsweise aus dem erfindungsgemäßen Polymer, durch Verdünnen mit Wasser herzustellen.

Eine erfindungsgemäße Zusammensetzung beziehungsweise ein erfindungsgemäßes Polymer kann selbst im trockenen Zustand eine deutlich verzögerte Zündung auf der Oberfläche eines mit der Zusammensetzung beschichteten, entflammbaren Materials, eine erheblich reduzierte Rauchentwicklung sowie nahezu kein Nachglimmen bewirken.

Dabei ist es vorteilhafterweise möglich eine erfindungsgemäße Zusammensetzung beziehungsweise ein erfindungsgemäßes Polymer nach Gebrauch durch Spülen mit Wasser zu entfernen.

Zudem kann eine erfindungsgemäße Zusammensetzung vorteilhafterweise sehr frostbeständig sein. So ist es beispielsweise möglich eine erfindungsgemäße wasserhaltige Zusammensetzung zu erhalten, die noch bei -30 °C versprüht werden kann und bei -60 °C eine hochviskose aber noch plastische Masse ist. Dadurch kann auch bei sehr tiefen Temperaturen ein Bersten der Behälter vermieden werden.

Weiterhin kann eine erfindungsgemäße Zusammensetzung beziehungsweise ein erfindungsgemäßes Polymer nicht korrosiv, insbesondere gegen Aluminium und Stahl, sein. Dies ist insbesondere vorteilhaft, da Fahrzeuge, wie Kraftfahrzeuge und Flugzeuge, zu einem großen Anteil aus Aluminium und Stahl bestehen können. Zudem bietet dies die Möglichkeit die Zusammensetzung, beispielsweise mehrere Jahre, in metallischen Behältnissen, zu lagern beziehungsweise zu bevorraten.

Hinsichtlich weiterer Merkmale und Vorteile wird hiermit explizit auf die Erläuterungen im Zusammenhang mit der erfindungsgemäßen Zusammensetzung, dem erfindungsgemäßen Verfahren, den erfindungsgemäßen Vorrichtungen, den Beispielen und der Figurenbeschreibung verwiesen.

Ein weiterer Gegenstand der vorliegenden Erfindung ist eine Lithium-Ionen-Batterie, welche eine erfindungsgemäße Zusammensetzung und/oder ein erfindungsgemäßes Polymer umfasst. Die erfindungsgemäße Zusammensetzung beziehungsweise das erfindungsgemäße Polymer kann dabei sowohl in die Batterie eindesignet beziehungsweise in der Batterie bevorratet als auch in die Batterie, insbesondere das Batteriegehäuse, beispielsweise in ein doppelwandiges Batteriegehäuse, einbringbar, beispielsweise einsprühbar, sein.

Hinsichtlich weiterer Merkmale und Vorteile wird hiermit explizit auf die Erläuterungen im Zusammenhang mit der erfindungsgemäßen Zusammensetzung, dem erfindungsgemäßen Verfahren, der erfindungsgemäßen Verwendung, den Beispielen und der Figurenbeschreibung verwiesen.

Ein weiterer Gegenstand der vorliegenden Erfindung ist eine stationäre oder mobile Löschvorrichtung, insbesondere in oder für ein Fahrzeug, in oder für eine Lithium-Ionen-Batterie, in oder für eine Lithium-Ionen-Batterie-Fertigungs-, Assemblierungs- und/oder Prüfanlage und/oder in oder für ein Lithium-Ionen-Batterie-Behältnis, beispielsweise Transportbehältnis, welche eine erfindungsgemäße brandlöschende und/oder brandhemmende Zusammensetzung und/oder ein erfindungsgemäßes Polymer enthält.

Hinsichtlich weiterer Merkmale und Vorteile wird hiermit explizit auf die Erläuterungen im Zusammenhang mit der erfindungsgemäßen Zusammensetzung, dem erfindungsgemäßen Verfahren, der erfindungsgemäßen Verwendung, den Beispielen und der Figurenbeschreibung verwiesen.

### Zeichnung und Beispiele

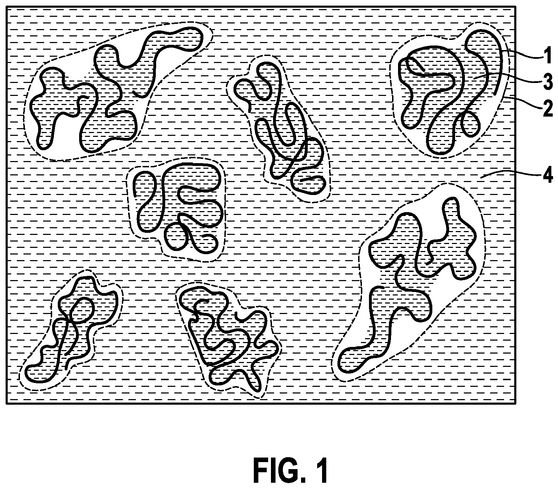

Weitere Vorteile und vorteilhafte Ausgestaltungen der erfindungsgemäßen Gegenstände werden durch die Zeichnung und Beispiele veranschaulicht und in der nachfolgenden Beschreibung erläutert. Dabei ist zu beachten, dass die Zeichnung und Beispiele nur beschreibenden Charakter haben und nicht dazu gedacht sind, die Erfindung in irgendeiner Form einzuschränken. Es zeigen
- Fig. 1: eine schematische Ansicht einer makromolekularen Lösung eines quellbaren Polymers.

Figur 1 veranschaulicht schematisch ein in einem Lösungsmittel gequollenes quellbares Polymer, welches zumindest teilweise mit Erdalkaliionen neutralisierte Säuregruppen, insbesondere Carboxygruppen, aufweist. Die Polymerketten 1 des Polymers bilden ein Knäul 2 mit einem Knäulvolumen aus. Das zwischen den Polymerketten 1 vorliegende Lösungsmittel kann dabei als gebundenes Lösungsmittel 3 bezeichnet werden. Das zwischen den Polymerknäulen 2 vorliegende Lösungsmittel kann dabei als freies Lösungsmittel 4 bezeichnet werden.

### Beispiel 1:

In einen Pflugscharkneter mit einem Volumen von fünf Litern wurden 1000 g entionisiertes Wasser und 810 g Acrylsäure vorgelegt und unter Durchperlen von Stickstoff 20 Minuten inertisiert. Dann wurde mit einer ebenfalls inertisierten, Calciumhydroxidlösung neutralisiert. Anschließend wurden Pentaerithrittriallylether und Sorbitanmonolaurat zugesetzt. Die Polymerisation wurde durch Zusatz einer wässrigen, persulfat- und ascorbinsäurehaltigen Lösung bei Raumtemperatur die gestartet. Das erhaltene Hydrogel wurde mit Calciumhydroxidlösung nachneutralisiert und im Umlufttrockenschrank getrocknet.

Das getrocknete Grundpolymer wurde gemahlen und auf 106 bis 850 µm abgesiebt. 100 g des getrockneten Grundpolymers wurden in einem Labormischer vorgelegt, der mit einem Aufsatz mit stumpfen Mischklingen ausgerüstet war. Bei mittlerer Drehzahl wurden dann mittels einer Injektionsspritze langsam durch ein Loch im Deckel des Mischaufsatzes langsam Ethylenglykoldiglycidylether gelöst in 1,2-Propandiol und Wasser unter Rühren zugefügt, um das Grundpolymer möglichst gleichmäßig zu benetzen. Das befeuchtete Polymer wurde durch Rühren homogenisiert, für 60 Minuten bei 150 °C im Umlufttrockenschrank getempert und ein 850 µm Sieb gesiebt.

### Beispiel 2a:

Eine brandlöschende und/oder brandhemmende Zusammensetzung wurde durch Einrühren von 2 Gew.-% quellbarem Polymer gemäß Beispiel 1, 0,2 Gew.-% Xanthan, 0,12 Gew.-% Polyethylenglykol (Lösungsvermittler) in 1 Liter Wasser hergestellt. Diese Zusammensetzung wies eine gute Quellfähigkeit auf.

### Beispiel 2b:

Eine brandlöschende und/oder brandhemmende Zusammensetzung wurde durch Einrühren von 2 Gew.-% quellbarem Polymer gemäß Beispiel 1, 3,5 Gew.-% Calciumgluconat, 0,2 Gew.-% Xanthan, 0,12 Gew.-% Polyethylenglykol (Lösungsvermittler) in 1 Liter Wasser hergestellt. Diese Zusammensetzung wies eine bessere Quellfähigkeit als eine analoge Zusammensetzung mit Calciumchlorid anstelle von Calciumgluconat auf.

### Beispiel 2c:

Eine brandlöschende und/oder brandhemmende Zusammensetzung wurde durch Einrühren von 2 Gew.-% quellbarem Polymer gemäß Beispiel 1, 6,5 Gew.-% Calciumlactat, 0,2 Gew.-% Xanthan, 0,12 Gew.-% Polyethylenglykol (Lösungsvermittler) in 1 Liter Wasser hergestellt. Diese Zusammensetzung wies eine bessere Quellfähigkeit als eine analoge Zusammensetzung mit Calciumchlorid anstelle von Calciumlactat auf.

### Beispiel 2d:

Eine brandlöschende und/oder brandhemmende Zusammensetzung wurde durch Einrühren von 2 Gew.-% quellbarem Polymer gemäß Beispiel 1, 20 Gew.-% Calciumlactatgluconat, 0,2 Gew.-% Xanthan, 0,12 Gew.-% Polyethylenglykol (Lösungsvermittler) in 1 Liter Wasser hergestellt. Diese Zusammensetzung wies eine bessere Quellfähigkeit als eine analoge Zusammensetzung mit Calciumchlorid anstelle von Calciumlactatgluconat auf.

### Brandversuche:

Brandversuche mit begleitender Analytik wurden an handelsüblichen Lithium-Ionen-Softpack/Pouch-Zellen (4Ah nominale Kapazität) der Firma Kokam exemplarisch durchgeführt. Die Lithium-Ionen-Zellen wurden hierfür durch Hintereinanderschaltung zu einem Modul konfektioniert und überladen und gezielt in einen "Thermal Runaway" getrieben, um einen Brand zu provozieren. Nach Entzünden der ersten Lithium-Ionen-Zelle (unter Feuererscheinung) im Modulverbund wurde mit verschiedenen Löschmitteln gelöscht, das Brandverhalten bewertet und das Löschwasser auf freies Fluorid und Phosphate hin untersucht. Bei den Brandversuchen wurden als Löschmittel Kohlendioxid, Metallbrandpulver für Lithium- und Magnesium-Brände (Quarzsand), Wasser, eine 2 gew.-%ige, wässrige Lösung des unter dem Handelsnamen Firesorp von der Firma Stockhausen Evonik vertriebenen Löschmittels, eine Kombination aus einer 2 gew.-%igen wässrigen Firesorp-Lösung und einer 1,5 gew.-%igen wässrigen Calciumchloridlösung sowie die Zusammensetzungen aus Beispiel 2a bis 2d untersucht. Laut Sicherheitsdatenblatt der Firma Stockhausen Evonik besteht Firesorp im Wesentlichen aus einem quellbaren Natriumionen teilneutralisierten Polymeren.

Beim Einsatz von Kohlendioxid als Löschmittel wurde nur kurzeitig die Luft und damit den Sauerstoff verdrängt. Zudem schien die Kühlleistung nicht auszureichen, so dass nach dem Entzünden der ersten Zelle und das Zünden von Nachbarzellen nicht verhindern werden konnte. Auch wurde eine starke Emission von Rauchgas beobachtet.

Beim Einsatz von Metallbrandpulver für Lithium- und Magnesium-Brände, insbesondere Quarzsand, als Löschmittel war ebenfalls eine starke Emission von Rauchgas zu beobachten.

Beim Einsatz von Wasser als Löschmittel floss das Löschwasser nach dem Entzünden der ersten Zelle ab oder verdunstete. Eine ausreichende Kühlwirkung konnte mit Wasser als Löschmittel nicht erzielt werden, so dass das Zünden von Nachbarzellen nicht verhindert werden konnte. Zudem wurde eine starke Emission von Rauchgas beobachtet. Fluorid- und Phosphationen waren im Löschwasser nachweisbar.

Beim Einsatz der wässrigen Firesorp-Lösung legte sich das gequollene Polymer nach dem Entzünden der ersten Zelle auf die brennende Zelle (Brandherd) und konnte das Zünden weiterer Zellen durch Bereitstellen einer Kühlwirkung verhindern. Auch hierbei wurde jedoch eine starke Emission von Rauchgas beobachtet. Außerdem waren auch Fluorid- und Phosphationen im Löschwasser nachweisbar.

Beim Einsatz einer Kombination aus einer wässrigen Firesorp-Lösung und einer wässrigen Calciumchloridlösung als Löschmittel wurde festgestellt, dass die Kühlleistung signifikant schlechter war als beim alleinigen Einsatz einer Firesorp-Lösung. Ursache hierfür ist vermutlich eine Verringerung der Quellfähigkeit und damit der Kühlleistung des in Firesorp enthaltenen quellbaren Polymers aufgrund eines durch die Chloridionen des Calciumchlorids ausgelösten Aussalzens des Polymers.

Beim Einsatz der Zusammensetzungen aus Beispiel 2a bis 2d legte sich das gequollene Polymer auf die brennende Zelle (Brandherd) und konnte das Zünden weiterer Zellen durch Bereitstellen einer Kühlwirkung verhindern. Verglichen mit den Brandversuchen mit Kohlendioxid, Metallbrandpulver, Wasser, Firesorp-Lösung und der Firesorp-Calciumchlorid-Lösungskombination als Löschmittel konnte durch die Zusammensetzungen aus Beispiel 2a bis 2d eine signifikant bessere Rauchgasniederschlagung und signifikant geringere Rauchgasemission beobachtet werden. Die Zusammensetzungen aus Beispiel 2b bis 2d zeigten dabei eine noch bessere Rauchgasniederschlagung und noch geringere Rauchgasemission als die Zusammensetzungen aus Beispiel 2a. Die Zusammensetzung aus Beispiel 2d zeigt dabei die besten Ergebnisse der Beispiele 2b bis 2c. Nach dem Löschen mit den Zusammensetzungen aus Beispiel 2a bis 2d konnten keine Fluorid- und Phosphationen im Löschwasser nachgewiesen werden.

## Patentansprüche

1. Brandlöschende und/oder brandhemmende Zusammensetzungen, insbesondere für Brände von Fluor- und/oder Phosphor-haltigen Materialien, beispielsweise für Brände mit Fluorwasserstoff und/oder Phosphoroxidtrifluorid-Entwicklung, zum Beispiel für Brände von Lithium-Ionen-Batterien, umfassend mindestens ein quellbares Polymer, wobei das quellbare Polymer Carboxygruppen, aufweist, wobei die Carboxygruppen zumindest teilweise mit Erdalkaliionen neutralisiert sind, wobei die neutralisierten Carboxygruppen des quellbaren Polymers zu mindestens 80 mol-% Erdalkaliionen als Gegenion aufweisen.

2. Zusammensetzung nach Anspruch 1, wobei die Carboxygruppen zumindest teilweise mit Calciumionen neutralisiert sind.

3. Zusammensetzung nach Anspruch 1 oder 2, wobei die Zusammensetzung mindestens ein Erdalkalicarboxylat, insbesondere Calciumcarboxylat, einer oder mehrere Carbonsäuren, insbesondere mit einem Molekulargewicht von unter 5000 g/mol, insbesondere von unter 1000 g/mol, beispielsweise von unter 500 g/mol, zum Beispiel von unter 200 g/mol, umfasst.

4. Zusammensetzung nach Anspruch 3, wobei das Erdalkalicarboxylat eine oder mehrere, gleiche oder unterschiedliche Carboxylatgruppen umfasst, welche ausgewählt sind aus der Gruppe bestehend aus Lactat, Gluconat, Citrat, Oxalat und Tartrat.

5. Zusammensetzung nach 3 oder 4, wobei das Erdalkalicarboxylat ausgewählt ist aus der Gruppe bestehend aus Calciumlactatgluconat, Calciumlactat, Calciumgluconat, Calciumcitrat, Calciumoxalat, Calciumtartrat und Kombinationen davon, insbesondere Calciumlactatgluconat, Calciumlactat, Calciumgluconat und Kombinationen davon.

6. Zusammensetzung nach einem der Ansprüche 1 bis 5, wobei das quellbare Polymer ein zumindest teilweise Erdalkaliionen neutralisiertes, insbesondere vernetztes, Polymer auf der Basis von Acrylsäure und/oder Acrylsäurederivaten ist.

7. Zusammensetzung nach einem der Ansprüche 1 bis 6, wobei das quellbare Polymer ein zumindest teilweise Erdalkaliionen neutralisiertes, insbesondere vernetztes, Acrylsäure-Acrylamid-Copolymer ist.

8. Zusammensetzung nach einem der Ansprüche 1 bis 7, wobei die Zusammensetzung mindestens ein Schaummittel umfasst.

9. Zusammensetzung nach einem der Ansprüche 1 bis 8, wobei die Zusammensetzung Wasser umfasst.

10. Quellbares, Carboxygruppen aufweisendes, insbesondere vernetztes, Polymer, insbesondere auf der Basis von Acrylsäure und/oder Acrylsäurederivaten, wobei die Carboxygruppen zumindest teilweise mit Erdalkaliionen neutralisiert sind, wobei die neutralisierten Carboxygruppen des quellbaren Polymers zu mindestens 80 mol-% Erdalkaliionen, insbesondere Calciumionen, als Gegenion aufweisen.

11. Verfahren zur Herstellung einer Zusammensetzung nach einem der Ansprüche 1 bis 9 und/oder eines Polymers nach Anspruch 10,
- wobei Monomere bereitgestellt werden, welche zu einem quellbaren Polymer polymerisierbar sind und welche jeweils mindestens eine an der Polymerisationsreaktion nicht teilnehmende Carboxygruppe aufweisen,
- wobei die Carboxygruppen, zunächst zumindest teilweise mit Erdalkaliionen, insbesondere Calciumionen, neutralisiert werden und die Monomere später zu dem quellbaren Polymer polymerisiert werden, und/oder
- wobei die Monomere zunächst zu dem quellbaren Polymer polymerisiert werden und die Carboxygruppen später zumindest teilweise mit Erdalkaliionen, insbesondere Calciumionen, neutralisiert werden,
wobei die Neutralisation derart erfolgt, dass die neutralisierten Carboxygruppen des quellbaren Polymers zu mindestens 80 mol-% Erdalkaliionen, insbesondere Calciumionen, als Gegenion aufweisen, und/oder
- wobei mindestens ein quellbares, Carboxygruppen aufweisendes Polymer bereitgestellt wird, dessen Säuregruppen, insbesondere Carboxygruppen, zumindest teilweise mit Alkaliionen neutralisiert sind, wobei die Alkaliionen mittels Ionenaustauscher zumindest teilweise gegen Erdalkaliionen, insbesondere Calciumionen, ausgetauscht werden.

12. Verwendung eines quellbaren, Carboxygruppen aufweisenden Polymers, wobei die Carboxygruppen zumindest teilweise mit Erdalkaliionen neutralisiert sind, insbesondere einer Zusammensetzung nach einem der Ansprüche 1 bis 9 und/oder eines Polymers nach Anspruch 10, zur Brandbekämpfung und/oder zur Herstellung einer brandhemmenden Beschichtung zur Brandbekämpfung und/oder Brandhemmung von Bränden von Fluor- und/oder Phosphor-haltigen Materialien, beispielsweise für Brände mit Fluorwasserstoff und/oder Phosphoroxidtrifluorid-Entwicklung, zum Beispiel für Brände von Lithium-Ionen-Batterien.

13. Verwendung eines quellbaren, Carboxygruppen aufweisenden Polymers, wobei die Carboxygruppen zumindest teilweise mit Erdalkaliionen neutralisiert sind, insbesondere einer Zusammensetzung nach einem der Ansprüche 1 bis 9 und/oder eines Polymers nach Anspruch 10, in einer stationären oder mobilen Löschvorrichtung in oder für ein Fahrzeug, in oder für ein Lithium-Ionen-Batterie, in oder für eine Lithium-Ionen-Batterie-Fertigungs-, Assemblierungs- und/oder -Prüfanlage und/oder in oder für ein Lithium-Ionen-Batterie-Behältnis, beispielsweise Transportbehältnis.

14. Lithium-Ionen-Batterie, umfassend ein quellbares, Carboxygruppen aufweisenden Polymers, wobei die Carboxygruppen zumindest teilweise mit Erdalkaliionen neutralisiert sind, insbesondere umfassend eine Zusammensetzung nach einem der Ansprüche 1 bis 9 und/oder ein Polymer nach Anspruch 10.

15. Stationäre oder mobile Löschvorrichtung für ein Fahrzeug, für eine Lithium-Ionen-Batterie, für eine Lithium-Ionen- Batterie-Fertigungs-, Assemblierungs- und/oder Prüfanlage und/oder für ein Lithium-Ionen-Batterie-Behältnis, beispielsweise Transportbehältnis, enthaltend ein quellbares, Carboxygruppen aufweisendes Polymer, wobei die Carboxygruppen zumindest teilweise mit Erdalkaliionen neutralisiert sind, insbesondere enthaltend eine Zusammensetzung nach einem der Ansprüche 1 bis 9 und/oder ein Polymer nach Anspruch 10.

## Claims

1. Fire-extinguishing and/or fire-retardant compositions, especially for fires of fluorine- and/or phosphorus-containing materials, for example for fires involving hydrogen fluoride and/or phosphorus oxide trifluoride evolution, for example for fires of lithium ion batteries, comprising at least one swellable polymer, the swellable polymer having carboxyl groups, at least some of the carboxyl groups having been neutralized with alkaline earth metal ions, wherein the neutralized carboxyl groups of the swellable polymer have alkaline earth metal ions as counterion to an extent of at least 80 mol%.

2. Composition according to Claim 1, wherein at least some of the carboxyl groups have been neutralized with calcium ions.

3. Composition according to Claim 1 or 2, which comprises at least one alkaline earth metal carboxylate, especially calcium carboxylate, of one or more carboxylic acids, especially having a molecular weight of less than 5000 g/mol, especially of less than 1000 g/mol, by way of example of less than 500 g/mol, for example of less than 200 g/mol.

4. Composition according to Claim 3, wherein the alkaline earth metal carboxylate comprises one or more identical or different carboxylate groups selected from the group consisting of lactate, gluconate, citrate, oxalate and tartrate.

5. Composition according to Claim 3 or 4, wherein the alkaline earth metal carboxylate is selected from the group consisting of calcium lactate gluconate, calcium lactate, calcium gluconate, calcium citrate, calcium oxalate, calcium tartrate and combinations thereof, especially calcium lactate gluconate, calcium lactate, calcium gluconate and combinations thereof.

6. Composition according to any of Claims 1 to 5, wherein the swellable polymer is an at least partly alkaline earth metal ion-neutralized, especially crosslinked, polymer based on acrylic acid and/or acrylic acid derivatives.

7. Composition according to any of Claims 1 to 6, wherein the swellable polymer is an at least partly alkaline earth metal ion-neutralized, especially crosslinked, acrylic acid-acrylamide copolymer.

8. Composition according to any of Claims 1 to 7, which comprises at least one foaming agent.

9. Composition according to any of Claims 1 to 8, which comprises water.

10. Swellable polymer which has carboxyl groups and is especially crosslinked, especially based on acrylic acid and/or acrylic acid derivatives, wherein at least some of the carboxyl groups have been neutralized with alkaline earth metal ions, wherein the neutralized carboxyl groups of the swellable polymer have alkaline earth metal ions, especially calcium ions, as counterion to an extent of at least 80 mol%.

11. Process for producing a composition according to any of Claims 1 to 9 and/or a polymer according to Claim 10,
- wherein monomers which are polymerizable to give a swellable polymer and which each have at least one carboxyl group which does not take part in the polymerization reaction are provided,
- wherein the carboxyl groups are first at least partly neutralized with alkaline earth metal ions, especially calcium ions, and the monomers are later polymerized to give the swellable polymer, and/or
- wherein the monomers are first polymerized to give the swellable polymer and the carboxyl groups are later at least partly neutralized with alkaline earth metal ions, especially calcium ions,
- wherein the neutralization is effected such that the neutralized carboxyl groups of the swellable polymer have alkaline earth metal ions, especially calcium ions, as counterion to an extent of at least 80 mol% and/or
- wherein at least one swellable polymer having carboxyl groups is provided, wherein the acid groups, especially carboxyl groups, have been at least partly neutralized with alkali metal ions, the alkali metal ions being exchanged by means of ion exchangers at least partly for alkaline earth metal ions, especially calcium ions.

12. Use of a swellable polymer having carboxyl groups, wherein at least some of the carboxyl groups have been neutralized with alkaline earth metal ions, especially of a composition according to any of Claims 1 to 9 and/or of a polymer according to Claim 10, for firefighting and/or for producing a fire-retardant coating for firefighting and/or fire retardance of fires of fluorine- and/or phosphorus-containing materials, for example for fires involving hydrogen fluoride and/or phosphorus oxide trifluoride evolution, for example for fires of lithium ion batteries.

13. Use of a swellable polymer having carboxyl groups, wherein at least some of the carboxyl groups have been neutralized with alkaline earth metal ions, especially of a composition according to any of Claims 1 to 9 and/or of a polymer according to Claim 10, in a stationary or mobile extinguishing apparatus in or for a vehicle, in or for a lithium ion battery, in or for a lithium ion battery manufacturing, assembly and/or testing system, and/or in or for a lithium ion battery vessel, for example transport vessel.

14. Lithium ion battery comprising a swellable polymer having carboxyl groups, wherein at least some of the carboxyl groups have been neutralized with alkaline earth metal ions, especially comprising a composition according to any of Claims 1 to 9 and/or a polymer according to Claim 10.

15. Stationary or mobile extinguishing apparatus for a vehicle, for a lithium ion battery, for a lithium ion battery manufacturing, assembly and/or testing system and/or for a lithium ion battery vessel, for example transport vessel, comprising a swellable polymer having carboxyl groups, wherein at least some of the carboxyl groups have been neutralized with alkaline earth metal ions, especially comprising a composition according to any of Claims 1 to 9 and/or a polymer according to Claim 10.

## Revendications

1. Compositions pour éteindre des incendies et/ou retarder des incendies, notamment pour des incendies de matériaux contenant du fluor et/ou du phosphore, par exemple pour des incendies avec dégagement de fluorure d'hydrogène et/ou d'oxytrifluorure de phosphore, par exemple pour des incendies de batteries lithium-ion, comprenant au moins un polymère gonflable, le polymère gonflable comprenant des groupes carboxy, les groupes carboxy étant au moins partiellement neutralisés avec des ions alcalino-terreux, les groupes carboxy neutralisés du polymère gonflable comprenant au moins 80 % en moles d'ions alcalino-terreux en tant que contre-ion.

2. Composition selon la revendication 1, dans laquelle les groupes carboxy sont au moins partiellement neutralisés avec des ions calcium.

3. Composition selon la revendication 1 ou 2, dans laquelle la composition comprend au moins un carboxylate alcalino-terreux, notamment du carboxylate de calcium, un ou plusieurs acides carboxyliques, notamment ayant un poids moléculaire inférieur à 5 000 g/mol, notamment inférieur à 1 000 g/mol, par exemple inférieur à 500 g/mol, par exemple inférieur à 200 g/mol.

4. Composition selon la revendication 3, dans laquelle le carboxylate alcalino-terreux comprend un ou plusieurs groupes carboxylate identiques ou différents, qui sont choisis dans le groupe constitué par un lactate, un gluconate, un citrate, un oxalate et un tartrate.

5. Composition selon la revendication 3 ou 4, dans laquelle le carboxylate alcalino-terreux est choisi dans le groupe constitué par le lactate-gluconate de calcium, le lactate de calcium, le gluconate de calcium, le citrate de calcium, l'oxalate de calcium, le tartrate de calcium et leurs combinaisons, notamment le lactate-gluconate de calcium, le lactate de calcium, le gluconate de calcium et leurs combinaisons.

6. Composition selon l'une quelconque des revendications 1 à 5, dans laquelle le polymère gonflable est un polymère à base d'acide acrylique et/ou de dérivés d'acide acrylique, au moins partiellement neutralisé par des ions alcalino-terreux, notamment réticulé.

7. Composition selon l'une quelconque des revendications 1 à 6, dans laquelle le polymère gonflable est un copolymère d'acide acrylique-acrylamide au moins partiellement neutralisé par des ions alcalino-terreux, notamment réticulé.

8. Composition selon l'une quelconque des revendications 1 à 7, dans laquelle la composition comprend au moins un agent moussant.

9. Composition selon l'une quelconque des revendications 1 à 8, dans laquelle la composition comprend de l'eau.

10. Polymère gonflable, comprenant des groupes carboxy, notamment réticulé, notamment à base d'acide acrylique et/ou de dérivés d'acide acrylique, les groupes carboxy étant au moins partiellement neutralisés avec des ions alcalino-terreux, les groupes carboxy neutralisés du polymère gonflable comprenant au moins 80 % en moles d'ions alcalino-terreux, notamment d'ions calcium, en tant que contre-ion.

11. Procédé de fabrication d'une composition selon l'une quelconque des revendications 1 à 9 et/ou d'un polymère selon la revendication 10,
- selon lequel des monomères sont préparés, qui sont polymérisables en un polymère gonflable et qui comprennent chacun au moins un groupe carboxy ne participant pas à la réaction de polymérisation,
- les groupes carboxy étant tout d'abord au moins partiellement neutralisés avec des ions alcalino-terreux, notamment des ions calcium, et les monomères étant ultérieurement polymérisés en le polymère gonflable, et/ou
- les monomères étant tout d'abord polymérisés en le polymère gonflable, et les groupes carboxy étant ultérieurement au moins partiellement neutralisés avec des ions alcalino-terreux, notamment des ions calcium, la neutralisation ayant lieu de sorte que les groupes carboxy neutralisés du polymère gonflable comprennent au moins 80 % en moles d'ions alcalino-terreux, notamment d'ions calcium, et/ou
- selon lequel au moins un polymère gonflable comprenant des groupes carboxy est préparé, dont les groupes acides, notamment les groupes carboxy, sont au moins partiellement neutralisés avec des ions alcalins, les ions alcalins étant au moins partiellement remplacés par des ions alcalino-terreux, notamment des ions calcium, au moyen d'un échangeur d'ions.

12. Utilisation d'un polymère gonflable comprenant des groupes carboxy, les groupes carboxy étant au moins partiellement neutralisés avec des ions alcalino-terreux, notamment d'une composition selon l'une quelconque des revendications 1 à 9 et/ou d'un polymère selon la revendication 10, pour lutter contre des incendies et/ou pour la fabrication d'un revêtement ignifuge pour lutter contre des incendies et/ou pour retarder des incendies de matériaux contenant du fluor et/ou du phosphore, par exemple pour des incendies avec dégagement de fluorure d'hydrogène et/ou d'oxytrifluorure de phosphore, par exemple pour des incendies de batteries lithium-ion.

13. Utilisation d'un polymère gonflable comprenant des groupes carboxy, les groupes carboxy étant au moins partiellement neutralisés avec des ions alcalino-terreux, notamment d'une composition selon l'une quelconque des revendications 1 à 9 et/ou d'un polymère selon la revendication 10, dans un dispositif d'extinction stationnaire ou mobile dans ou pour un véhicule, dans ou pour une batterie lithium-ion, dans ou pour une unité de fabrication, d'assemblage et/ou de test de batteries lithium-ion, et/ou dans ou pour un contenant de batteries lithium-ion, par exemple un contenant de transport.

14. Batterie lithium-ion, comprenant un polymère gonflable comprenant des groupes carboxy, les groupes carboxy étant au moins partiellement neutralisés avec des ions alcalino-terreux, notamment comprenant une composition selon l'une quelconque des revendications 1 à 9 et/ou un polymère selon la revendication 10.

15. Dispositif d'extinction stationnaire ou mobile pour un véhicule, pour une batterie lithium-ion, pour une unité de fabrication, d'assemblage et/ou de test de batteries lithium-ion, et/ou pour un contenant de batteries lithium-ion, par exemple un contenant de transport, contenant un polymère gonflable comprenant des groupes carboxy, les groupes carboxy étant au moins partiellement neutralisés avec des ions alcalino-terreux, notamment contenant une composition selon l'une quelconque des revendications 1 à 9 et/ou un polymère selon la revendication 10.
